# EUROPÄISCHE PATENTSCHRIFT

(11) **EP 1 834 393 B1**
(45) Veröffentlichungstag und Bekanntmachung des Hinweises auf die Patenterteilung: **31.08.2016**
(21) Anmeldenummer: 06700412.7
(22) Anmeldetag: 05.01.2006
(51) Int. Cl.: H02J 3/14, H02J 3/38

(54) **VERFAHREN UND VORRICHTUNG ZUR STÜTZUNG DER WECHSELSPANNUNGSFREQUENZ IN EINEM ELEKTRIZITÄTSNETZ**
METHOD AND DEVICE FOR SUPPORTING THE ALTERNATING CURRENT FREQUENCY IN AN ELECTRICITY NETWORK
PROCÉDÉ ET DISPOSITIF POUR RENFORCER LA FRÉQUENCE DE LA TENSION ALTERNATIVE DANS UN RÉSEAU D'ÉLECTRICITÉ

(30) Priorität: 07.01.2005 DE 102005001009
(43) Veröffentlichungstag der Anmeldung: 19.09.2007
(73) Patentinhaber: STEAG Power Saar GmbH, 66111 Saarbrücken (DE)
(72) Erfinder: DENGEL, Andreas, 66539 Neunkirchen (DE); DÖRR, Heinz-Kurt, 66386 St. Ingbert-Hassel (DE)
(74) Vertreter: Wolff, Matthias
(86) Internationale Anmeldenummer: PCT/EP2006/000048
(87) Internationale Veröffentlichungsnummer: WO 2006/072576

(56) Entgegenhaltungen:
- EP-A- 0 472 294
- DE-A1- 10 210 099
- DE-A1- 19 516 838
- DE-A1- 19 605 419

## Beschreibung

Die Erfindung betrifft ein Verfahren zur Stützung der Frequenz in einem durch eine Anzahl von Kraftwerksanlagen gespeisten Wechselspannungsnetz im Rahmen der Primärregelung, bei dem Abweichungen der Netzfrequenz vom vorgegebenen Wert, die infolge kurzfristiger Verringerung der Netzlast oder/und Erhöhung der Erzeugungsleistung eintreten, durch Zuschaltung einer Last entgegengewirkt wird.

Die Konstanthaltung der Wechselspannungsfrequenz in Elektrizitätsnetzen stellt eine wichtige Aufgabe dar. Abweichungen von der vorgegebenen Frequenz können zum Versagen an das Netz angeschlossener Verbraucher und zu daraus resultierenden Folgeschäden führen.

Zu Abweichungen vom vorgegebenen Netzfrequenzwert kommt es vor allem dann, wenn sich die Leistungsanforderung an die mit dem Elektrizitätsnetz verbundenen Kraftwerke plötzlich ändert, weil z.B. ein Kraftwerk wegen einer Havarie vom Netz getrennt oder ein Großverbraucher zugeschaltet wird. Um die Netzfrequenz auf dem vorgegebenen Wert konstant oder in einem bestimmten Toleranzbereich zu halten, muß im Rahmen der sogenannten Primärregelung dafür gesorgt werden, dass die Erzeugungsleistung und die Netzlast ausgeglichen bleiben und immer so viel elektrische Leistung erzeugt, wie durch die Netzlast beim Betrieb mit der vorgegebenen Netzfrequenz verbraucht wird.

Um infolge kurzfristiger Laständerungen eingetretenen Änderungen der Netzfrequenz schnell entgegenwirken zu können, werden herkömmlich die Dampfturbinen-Antriebsmaschinen der Kraftwerksgeneratoren im Gleitdruckbetrieb mit angedrosselten Stellventilen betrieben. Durch Öffnen oder weiteres Schließen der Stellventile kann bei einer Netzfrequenzänderung zur Stützung der Netzfrequenz schnell die mechanische Antriebsleistung verändern werden. In den an der Frequenzstützung beteiligten Kraftwerken erfolgt die Änderung der Antriebsleistung im Rahmen der Primärregelung abhängig von der Netzfrequenz entsprechend dem sogenannten Proportionalgrad.

Nachteilig mindert die Drosselung den Wirkungsgrad der Antriebsmaschine. Entsprechend hoch ist der spezifische, auf die jeweilige mechanische Antriebsleistung bezogene Brennstoffverbrauch.

Bei dem herkömmlich ferner zur kurzfristigen Änderung der Antriebsleistung durch die Antriebsmaschine angewandten Kondensatstop-Verfahren sind solche, auf verringertem Wirkungsgrad der Antriebsmaschine beruhenden Verluste zwar geringer, es müssen aber große Volumina im Dampf-Kondensat-Kreislauf zur Verfügung gestellt werden. Bei älteren Kraftwerksanlagen besteht keine Möglichkeit zur Nachrüstung.

Aus der EP-A-0472294 ist ein Wechselspannungsgenerator bekannt, dessen Spannung und Frequenz dadurch stabilisiert werden, dass bei einem Leistungsüberangebot ein Akkumulator als Last zugeschaltet und bei einem Leistungsunterangebot dem Akkumulator elektrische Energie zur Stützung entnommen wird.

Die DE 102 10 099 A1 beschreibt ein Inselnetz mit mehreren regenerativen Energiequellen, die an einen Gleichspannungszwischenkreis angeschlossen sind. Aus der Gleichspannung des Zwischenkreises erzeugt ein netzgeführter Wechselrichter die Netzspannung. Als Netzbildner dient ein teilweise als Motor betriebener Generator, der primär die Regelung der Netzfrequenz und der Netzspannung übernimmt. An den Gleichspannungszwischenkreis angeschlossene, wahlweise auf- und entladbare Akkumulatoren sowie eine am Netz liegende Meerwasserentsalzungsanlage dienen darüber hinaus dem Ausgleich von Energieangebot und Energieverbrauch.

In der DE 195 16 838 A1 wird die Möglichkeit der Primärregelung gemäß dem eingangs beschriebenen Verfahren durch einen Energiespeicher erwähnt, dem bei Leistungsüberangebot Energie zugeführt und bei Leistungsunterangebot Energie entnommen wird.

Der vorliegenden Erfindung liegt die Aufgabe zugrunde, den herkömmlich mit der Stützung der Netzfrequenz verbundenen Energie- oder Bauaufwand zu verringern.

Diese Aufgabe wird durch die Merkmale des Verfahrensanspruchs 1 und des Vorrichtungsanspruchs 4 gelöst.

Gemäß der Erfindung werden zur Stützung der Netzfrequenz kurzfristige Änderungen der Leistungsanforderung durch das Elektrizitätsnetz nicht, wie nach dem Stand der Technik, z.B. durch entsprechende Änderungen der mechanischen Leistung der Antriebsmaschinen, sondern durch Änderungen einer Zusatzlast ausgeglichen.

Vorteilhaft lässt sich die Größe einer solchen Zusatzlast schneller als die Maschinenantriebsleistung ändern. Entsprechend schneller können Abweichungen der Netzfrequenz vom vorgegebenen Wert ausgeregelt werden. Da die Leistung der Antriebsmaschine bei dem Frequenutützungsverfahren nach der Erfindung konstant bleiben kann, erübrigt sich die Drosselung und die Antriebsmaschine lässt sich mit dem für die jeweilige mechanische Ausgangsleistung größtmöglichen Wirkungsgrad betreiben. Dem für die die Zusatzlast erforderlichen Mehraufwand an Antriebsenergie für die an der Frequenutützung beteiligten Generatoren steht die mit dem Betrieb der Antriebsmaschinen bei optimalem Wirkungsgrad erreichte Ersparnis gegenüber.

Vorteilhaft lassen sich die Elektrolysebaueinheiten als Zusatztast schnell zu- oder abschalten, wobei Funktionsfähigkeit und Lebensdauer solcher Baueinheiten durch Zu-/Abschaltzyklen auch in großer Zahl kaum beeinträchtigt werden.

Im Rahmen der Frequenutützung werden in den an der Primärregelung beteiligten Kraftwerken Lastbaueinheiten in solcher Zahl zu- oder abgeschaltet, dass die Netzfrequenz im vorgegebenen Toleranzbereich bleibt.

Gegebenenfalls wird nach einer Zu- oder Abschaltung von Lastbaueinheiten die Antriebsleistung für die Generatoren so verändert, dass die Zahl der zur Frequenzstützung zu- und abschaltbaren Lastbaueinheiten wieder dem vorhergehenden Zustand entsprechend gewählt sein kann.

Der gewonnene Wasserstoff lässt sich zur Wiedergewinnung elektrischer Energie einsetzen, wobei der Einsatz von Brennstoffzellen vorteilhaft erscheint. Über nachgeschaltete Wechselrichter kann eine Einspeisung der gewonnenen Elektroenergie ins Netz erfolgen.

Die Erfindung wird nachfolgend anhand eines Ausführungsbeispiels und der beiliegenden, sich auf dieses Ausführungsbeispiel beziehenden Zeichnungen näher erläutert. Es zeigen:
- Fig. 1: eine schematische Darstellung einer Kraftwerksanlage mit einer Vorrichtung zur Stützung der Netzfrequenz nach der Erfindung,
- Fig. 2: eine schematische Darstellung eines in der Vorrichtung von Fig. 1 verwendeten Regelkreises.

Ein Dampferzeuger 1 einer Kraftwerksanlage liefert Dampf für eine Dampfturbinen-Antriebsmaschine 2, welche einen Generator 3 antreibt.

Der Generator 3 erzeugt elektrische Energie, die über einen Netztransformator 4 an ein Elektrizitätsnetz 5 abgegeben wird.

Parallel zum Elektrizitätsnetz 5 ist an den Generator 3 eine zusätzliche Last 6 angeschlossen, welche in dem betreffenden Ausführungsbeispiel eine Parallelschaltung aus einer Anzahl von Elektrolyseeinheiten 7 umfasst. Die jeweils einen Transformator und einen Gleichrichter aufweisenden Elektrolyseeinheiten 7 erzeugen Wasserstoffgas. Das unter Druck erzeugte Wasserstoffgas gelangt über eine Sammelleitung 8 und eine Pumpe 9 in einen Speicher 10. Die Elektrolyseeinheiten 7 der zusätzlichen Last 6 lassen sich einzeln jeweils über einen Schalter 11 mit dem Generator 3 verbinden bzw. vom Generator 3 trennen.

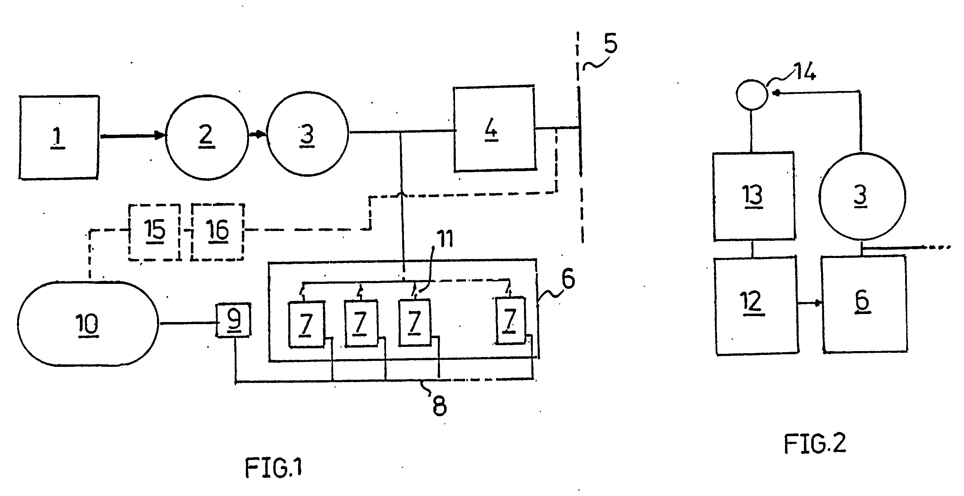

Die Schalter 11 sind Bestandteil einer in Fig. 2 gezeigten Leistungsschalteinrichtung 12, welche von einem Regler 13 angesteuert wird. Der Regler 13 steht in Verbindung mit einem Sensor 14 zur Erfassung der Drehfrequenz der Turbine der Antriebsmaschine 2.

Im normalen Betrieb des Kraftwerkes wird der Generator 3 durch die Antriebsmaschine 2 mit kurzfristig gesehen konstanter, der jeweiligen Netzanforderung entsprechender mechanischer Leistung angetrieben. Antriebsmaschine 2 und Dampferzeuger 1 sind so eingestellt, dass die Erzeugung der Antriebsleistung bei größtmöglichem Wirkungsgrad, d.h. geringstmöglichem Einsatz an Brennstoff, erfolgt. Der mechanischen Antriebsleistung der Antriebsmaschine 2 entsprechend erzeugt der Generator 3 eine elektrische Leistung, welche sich auf das Elektrizitätsnetz 5 und die zusätzliche Last 6 verteilt. Die Drehfrequenz des Generators ist gleich der Netzfrequenz, beträgt also normalerweise 50 Hz. Die Hälfte der Elektrolyseeinheiten 7 bildet eine zusätzliche Last 6.

Z.B. bei Trennung eines Kraftwerks vom Netz oder Zuschaltung eines Großverbrauchers erhöht sich die Belastung aller mit dem Elektrizitätsnetz 5 verbundenen Kraftwerksanlagen. Infolge dieser Mehrbelastung sinkt gleichmäßig die Drehfrequenz aller Kraftwerksgeneratoren und damit die Netzfrequenz.

Eine in Fig. 2 gezeigte automatische Regeleinrichtung trägt dazu bei, die Netzfrequenz wieder auf den vorgeschriebenen Wert anzuheben bzw. sie in einem vorgegebenen Toleranzbereich zu halten.

Ein Sensor 14 misst die Drehfrequenz des Generators 3 und ein Regler 13 vergleicht die gemessene Drehfrequenz ständig mit dem vorgeschriebenen Wert der Netzfrequenz von 50 Hz. Je nach ermittelter Abweichung erzeugt der Regler 13 Steuersignale zur Abschaltung von Elektrolyseeinrichtungen 7. Damit steigt die für das Netz 5 zur Verfügung stehende Leistung des Kraftwerks.

Indem alle an der Frequenzstützung beteiligten Kraftwerke ihre Leistung so erhöhen, dass ein plötzlich weggefallener Leistungsanteil oder ein plötzlicher Leistungsmehrbedarf dadurch ausgeglichen wird, kann die Netzfrequenz wieder auf den vorgeschriebenen Wert ansteigen.

Verringert sich umgekehrt kurzfristig die durch das Netz 5 gebildete Last, z.B. durch Trennung eines Großverbrauchers vom Netz, so kann durch Zuschaltung von Elektrolyseeinheiten 7 ein entsprechender Ausgleich erfolgen.

Die Elektrolyseeinheiten erlauben eine kurzfristige Lastzu- oder -abschaltung in Sekundenbruchteilen. Entsprechend schnell können Abweichungen der Netzfrequenz vom vorgegebenen Wert ausgeregelt werden.

Funktion und Lebensdauer der Elektrolyseeinheiten 7 werden durch häufiges An- und Abschalten kaum beeinträchtigt.

Das produzierte Wasserstoffgas wird durch eine Pumpe 9 weiter verdichtet und in einen Speicher 10 gepumpt. Der Wasserstoff ließe sich z.B. zum Antrieb von Kraftfahrzeugen nutzen. Im Rahmen einer auf Wasserstoff basierenden Treibstoffwirtschaft könnten Kraftwerke als Treibstofflieferanten Bedeutung erlangen.

Durch Strichlinien ist eine weitere Nutzungsmöglichkeit angedeutet. Der Wasserstoff könnte in einer Brennstoffzelle 15 zur Erzeugung elektrischer Energie verwendet werden, welche über einen Wechselrichter 16 ins Elektrizitätsnetz 5 eingespeist wird.

## Patentansprüche

1. Verfahren zur Stützung der Frequenz in einem durch eine Anzahl von Kraftwerksanlagen gespeisten Wechselspannungsnetz im Rahmen der Primärregelung,
**dadurch gekennzeichnet, dass**
Abweichungen der Netzfrequenz vom vorgegebenen Wert, welche infolge kurzfristiger Änderungen der Netzlast und/oder Erzeugungsleistung eintreten, durch Verringerung oder Vergrösserung einer Zusatzlast (6) entgegengewirkt wird wobei
das Wechselspannungsnetz bei Normalfrequenz mit einer Zusatzlast aus mehreren Lastbaueinheiten betrieben wird, wobei einer Verringerung der Netzfrequenz gegenüber der Normalfrequenz durch sukzessive Abschaltung und einer Erhöhung der Netzfrequenz durch sukzessive Zuschaltung von Lastbaueinheiten entgegengewirkt wird, und dass als Lastbaueinheiten wasserstofferzeugende Elektrolyseeinheiten verwendet werden.

2. Verfahren nach Anspruch 1,
**dadurch gekennzeichnet,**
**dass** die Zusatzlast (6) in einer an der Frequenzstützung beteiligten Kraftwerksanlage installiert wird.

3. Verfahren nach Anspruch 2,
**dadurch gekennzeichnet,**
**dass** die Kraftwerksanlage im Gleitdruckbetrieb mit ungedrosselten Turbinenstellventilen betrieben wird.

4. Vorrichtung zur Stützung der Frequenz in einem durch eine Anzahl von Kraftwerksanlagen gespeisten Wechselspannungsnetz im Rahmen der Primärregelung,
**gekennzeichnet dadurch dass**,
Abweichungen der Netzfrequenz vom vorgegebenen Wert, welche infolge kurzfristiger Änderungen der Netzlast und/oder Erzeugungsleistung eintreten, durch Verringerung oder Vergrösserung einer Zusatzlast (6) entgegengewirkt wird
sowie ferner **gekennzeichnet durch**
mehrere Lastbaueinheiten (7) zur Bildung einer bei Normalfrequenz am Netz anliegenden Zusatzlast (6), die in einer an der Frequenzstützung beteiligten Kraftwerksanlage als Teil der Eigenlast der Kraftwerksanlage installiert ist, sowie Regelungseinrichtungen (13,14) zur sukzessiven Abschaltung von Lastbaueinheiten (7) bei Unterschreitung der Normalfrequenz und zur sukzessiven Zuschaltung von Lastbaueinheiten (7) bei Überschreitung der Normalfrequenz, wobei es sich bei den Lastbaueinheiten um wasserstofferzeugende Elektrolyseeinheiten handelt.

5. Vorrichtung nach Anspruch 4,
**dadurch gekennzeichnet,**
**dass** Einrichtungen (15,16) zur Erzeugung in das Elektrizitätsnetz (5) einspeisbarer Elektroenergie aus dem Wasserstoff vorgesehen sind.

6. Vorrichtung nach Anspruch 5,
**dadurch gekennzeichnet,**
**dass** die Einrichtungen (15,16) eine Brennstoffzelle (15) umfassen.

## Claims

1. Method for supporting the frequency in an AC voltage network fed by a number of power plants as part of primary control,
**characterized in that**
deviations of the network frequency from the predefined value that occur due to short-term changes in the network load and/or generating power are counteracted by reducing or increasing an additional load (6), wherein
the AC voltage network is operated at normal frequency with an additional load from a number of load modules, wherein a reduction in the network frequency as compared with the normal frequency is counteracted by successive deactivation and an increase in the network frequency is counteracted by successive activation of load modules, and **in that** hydrogen-generating electrolysis units are used as the load modules.

2. Method according to Claim 1,
**characterized**
**in that** the additional load (6) is installed in a power plant that is involved in the frequency support.

3. Method according to Claim 2,
**characterized**
**in that** the power plant is operated in variable pressure mode with unthrottled turbine control valves.

4. Device for supporting the frequency in an AC voltage network fed by a number of power plants as part of primary control,
**characterized in that**
deviations of the network frequency from the predefined value that occur due to short-term changes in the network load and/or generating power are counteracted by reducing or increasing an additional load (6), and also **characterized by** a number of load modules (7) for forming an additional load (6) on the network at normal frequency, which is installed in a power plant involved in the frequency support as part of the power plant's own load,
and also controlling devices (13, 14) for the successive deactivation of load modules (7) when the normal frequency is not reached and for the successive activation of load modules (7) when the normal frequency is exceeded, wherein the load modules are hydrogen-generating electrolysis units.

5. Device according to Claim 4,
**characterized**
**in that** devices (15, 16) for generating electrical energy that can be fed into the electricity network (5) from the hydrogen are provided.

6. Device according to Claim 5,
**characterized**
**in that** the devices (15, 16) comprise a fuel cell (15).

## Revendications

1. Procédé pour supporter la fréquence dans un réseau électrique à tension alternative alimenté par un certain nombre de centrales électriques dans le cadre de la régulation primaire,
**caractérisé en ce que**
en réduisant ou en augmentant une charge supplémentaire (6), on s'oppose à des déviations de la fréquence du réseau par rapport à la valeur prédéfinie, qui surgissent à cause de brèves modifications de la charge du réseau et/ou de la puissance de production, et
lors d'une fréquence normale, on fait fonctionner le réseau électrique à tension alternative avec une charge supplémentaire de plusieurs unités structurelles de charge, et on s'oppose à une réduction de la fréquence de réseau par rapport à la fréquence normale par coupure successive d'unités structurelles de charge et à une augmentation de la fréquence de réseau par une mise en circuit successive, et **en ce que** l'on utilise à titre d'unités structurelles de charge des unités d'électrolyse produisant de l'hydrogène.

2. Procédé selon la revendication 1, **caractérisé en ce que** l'on installe la charge supplémentaire (6) dans une centrale électrique participant au support de la fréquence.

3. Procédé selon la revendication 2, **caractérisé en ce que** la centrale électrique est exploitée en marche sous pression variable avec des soupapes de réglage la turbine non étranglées.

4. Dispositif pour supporter la fréquence dans un réseau électrique à tension alternative alimentée par un certain nombre de centrales électriques dans le cadre de la régulation primaire,
**caractérisé en ce que**
une réduction ou une augmentation d'une charge supplémentaire (6) permet de s'opposer à des déviations de la fréquence du réseau par rapport à la valeur prédéfinie, qui surgissent à cause de brèves modifications de la charge du réseau et/ou de la puissance de production, et
caractérisé en ce outre par
plusieurs unités structurelles de charge (7) pour former une charge supplémentaire (6) qui s'applique au réseau lors d'une fréquence normale et qui est installée dans une centrale électrique participant à la stabilisation de fréquence en tant que partie de la charge propre de la centrale électrique, ainsi que des moyens de régulation (13, 14) pour la coupure successive d'unités structurelles de charge (7) lors d'un passage au-dessous de la fréquence normale et pour la mise en circuit successive d'unités structurelles de charge (7) lors d'un dépassement de la fréquence normale, les unités structurelles de charge étant des unités d'électrolyse produisant de l'hydrogène.

5. Dispositif selon la revendication 4, **caractérisé en ce qu'**il est prévu des moyens (15, 16) pour générer à partir de l'hydrogène de l'énergie électrique susceptible d'être alimentée dans le réseau électrique (5).

6. Dispositif selon la revendication 5, **caractérisé en ce que** les moyens (15, 16) comprennent une pile à combustible (15).
